# EUROPÄISCHE PATENTSCHRIFT

(11) **EP 3 694 668 B1**
(45) Veröffentlichungstag und Bekanntmachung des Hinweises auf die Patenterteilung: **06.12.2023**
(21) Anmeldenummer: 18785899.8
(22) Anmeldetag: 05.10.2018
(51) Int. Cl.: B23D 7/06, B23D 13/00, B23B 27/16, B23B 29/04, B23B 27/10

(54) **HALTER FÜR EIN NUTSTOSSWERKZEUG**
HOLDER FOR A SLOTTING TOOL
SUPPORT POUR UN OUTIL DE RAINURAGE

(30) Priorität: 12.10.2017 DE 102017123786
(43) Veröffentlichungstag der Anmeldung: 19.08.2020
(73) Patentinhaber: Hartmetall-Werkzeugfabrik Paul Horn GmbH, 72072 Tübingen (DE)
(72) Erfinder: KANZ, Andreas, 72393 Burladingen (DE); LUIK, Matthias, 72766 Reutlingen (DE)
(74) Vertreter: Witte, Weller & Partner Patentanwälte mbB
(86) Internationale Anmeldenummer: PCT/EP2018/077077
(87) Internationale Veröffentlichungsnummer: WO 2019/072696

(56) Entgegenhaltungen:
- WO-A1-2015/110132
- DE-A1- 3 934 703
- DE-A1-102006 035 182

## Beschreibung

Die vorliegende Erfindung betrifft einen Halter für ein Nutstoßwerkzeug sowie ein solches Nutstoßwerkzeug.

Gemäß dem Oberbegriff des Anspruchs 1 betrifft die vorliegende Erfindung einen Halter für ein Nutstoßwerkzeug mit einem eine Schneide aufweisenden Schneidwerkzeug und dem Halter zum Halten des Schneidwerkzeugs, wobei der Halter einen Einspannbereich und einen Haltebereich aufweist, wobei der Haltebereich an seinem dem Einspannbereich abgewandten Ende einen Sitz für das Schneidwerkzeug aufweist, der so ausgestaltet und angeordnet ist, dass bei in dem Sitz montiertem Schneidwerkzeug dessen Schneide über die Umfangsfläche des Haltebereichs vorsteht, wobei der Haltebereich an seiner Umfangsfläche eine Abstützung für das Schneidwerkzeug aufweist, die an der Umfangsfläche des Haltebereichs als radial vorstehender, einstückig ausgebildeter Abstützkörper ausgebildet ist, und wobei im Innern des Halters ein Kühlmittelkanal verläuft.

Das Nutstoßen ist ein spanabhebendes Verfahren zum Einbringen von Längsnuten in unterschiedlichsten Formen in ein Werkstück. Beim Nutstoßen führt das Nutstoßwerkzeug eine lineare Vorschubbewegung, den Arbeitshub, aus. Danach erfolgen ein Abheben des Nutstoßwerkzeugs vom Werkstück und ein Rückhub ohne Spanabtrag. Durch schrittweises Versetzen des Nutstoßwerkzeugs erfolgt die Zustellung für den Materialabtrag, bis die gewünschte Profiltiefe und/oder Profilbreite erreicht ist.

Ein Nutstoßwerkzeug-Halter gemäß dem Oberbegriff des Anspruchs 1 ist aus der DE 10 2006 035 182 A1 bekannt. Ein weiteres beispielhaftes Nutstoßwerkzeug ist aus der EP 2 212 041 B1 bekannt. Ferner ist aus der WO 2015/110132 A1 ein Abstechhalter und aus der DE 39 34 703 A1 ein weiteres Werkzeug zum Herstellen von Nuten bekannt.

Das in der EP 2 212 041 B1 offenbarte Nutstoßwerkzeug umfasst ein eine Schneide aufweisendes Schneidwerkzeug und einen Halter zum Halten des Schneidwerkzeugs. Der Halter hat einen Einspannbereich zum Einspannen in eine Werkzeugmaschine und einen Haltebereich zum Halten des Schneidwerkzeugs. Der Haltebereich weist einen an seinem dem Einspannbereich abgewandten Ende einen Sitz für das Schneidwerkzeug, beispielsweise in Form einer stirnseitigen Vertiefung, auf, der so ausgestaltet und angeordnet ist, dass bei in dem Sitz montiertem Schneidwerkzeug dessen Schneide über die Umfangsfläche des Haltebereichs vorsteht. An dem Haltebereich ist an seiner Umfangsfläche eine Abstützung für das Schneidwerkzeug vorgesehen, die bei der Bearbeitung auf das Schneidwerkzeug wirkende Kräfte aufnimmt und somit das Schneidwerkzeug abstützt.

Auch beim Nutstoßen ist die Kühlung und Schmierung des spanabhebenden Bearbeitungsprozesses von Bedeutung. Allerdings gestaltet sich die Zufuhr von Kühlschmierstoff (vorliegend vereinfacht als Kühlmittel bezeichnet) an die Zerspanstelle beim Stoßen von Innennuten in Bohrungen besonders schwierig. Eine häufig eingesetzte externe Kühlmittelzufuhr über Schläuche und Leitungen führt das Kühlmittel hierbei nur unzureichend an die Zerspanstelle. Deshalb werden für das Stoßen von Innennuten auch Nutstoßwerkzeuge mit interner Kühlmittelzufuhr eingesetzt. Die bekannten Lösungen bieten jedoch keine ausreichende und sichere Kühlung/Schmierung.

Der vorliegenden Erfindung liegt die Aufgabe zugrunde, einen Halter für ein Nutstoßwerkzeug sowie ein solches Nutstoßwerkzeug anzugeben, die eine verbesserte und sicherere Kühlung/Schmierung gewährleisten.

Die Aufgabe wird bei dem in Anspruch 1 angegebenen Halter dadurch gelöst, dass der Kühlmittelkanal zwei Austrittsöffnungen aufweist, die in Umfangsrichtung gesehen seitlich neben der Abstützung und/oder in Seitenflächen der Abstützung angeordnet sind.

Die Aufgabe wird ferner gemäß Anspruch 10 gelöst durch ein Nutstoßwerkzeug mit einem eine Schneide aufweisenden Schneidwerkzeug und einem erfindungsgemäß vorgeschlagenen Halter zum Halten des Schneidwerkzeugs.

Das Kühlmittel verläuft somit bei dem erfindungsgemäßen Halter durch den Halter hindurch, wobei diese Führung des Kühlmittels durch den Kühlmittelkanal so gestaltet ist, dass es seitlich neben und/oder an der Abstützung austritt, also in unmittelbarer Nähe des Schneidwerkzeugs. Dadurch wird zum einen gewährleistet, dass das Kühlmittel keinen langen Weg bis zur Zerspanstelle, nach dem Austritt aus den Austrittsöffnungen, zurücklegen muss, und somit sicher das Schneidwerkzeug trifft. Ferner kann eine zuverlässige Kühlung und Schmierung auch bei großen Bearbeitungstiefen in Bohrungen gewährleistet werden. Auch zu Beginn der zerspanenden Bearbeitung, also wenn etwa das Nutstoßwerkzeug am Anfang einer Bohrung die zerspanende Bearbeitung beginnt, trifft das Kühlmittel sicher auf die Zerspanstelle, und nicht erst dann, wenn eine gewisse Länge in der Bohrung zerspant wurde. Schließlich wird dadurch auch das Problem verhindert, dass ein Span zwischen der Zerspanstelle und einer Austrittsöffnung ein Auftreffen des Kühlmittels auf die Zerspanstelle verhindert, da das Kühlmittel aus seitlichen Richtungen auf das Schneidwerkzeug trifft, wo im Allgemeinen die Gefahr eines sich dort bildenden Spans geringer ist.

In einer bevorzugten Ausgestaltung ist vorgesehen, dass der Abstand der Austrittsöffnungen von dem Sitz geringer ist als von dem Einspannbereich. Dies bewirkt, dass eine möglichst gute Kühlung und Schmierung erreicht wird, dass also das austretende Kühlmittel möglichst treffsicher auf die Zerspanstelle trifft.

In einer weiteren Ausgestaltung ist vorgesehen, dass der Kühlmittelkanal und/oder die Austrittsöffnungen so ausgestaltet und angeordnet sind, dass austretendes Kühlmittel auf die Schneide und/oder seitliche an die Schneide (auch als Hauptschneide bezeichnet) angrenzende Flanken und/oder zwischen der Schneide und den Flanken liegende Ecken des Schneidwerkzeugs trifft. Es kann also gezielt bestimmt werden, welche Stellen des Schneidwerkzeugs von dem Kühlmittel getroffen werden sollen. Im Gegensatz zu bekannten Werkzeugen kann somit vorgesehen sein, dass die Flanken (auch als Nebenschneiden bezeichnet) und/oder Ecken des Schneidwerkzeugs durch das Kühlmittel gezielt getroffen werden, um dort unmittelbar eine Kühlung zu bewirken, was zu einer längeren Lebensdauer und einer Verringerung des Verschleißes beiträgt.

Weiter ist in einer Ausgestaltung vorgesehen, dass der Kühlmittelkanal eine dritte Austrittsöffnung aufweist, die auf der Oberseite der Abstützung angeordnet ist. Diese dritte Austrittsöffnung ist bevorzugt so ausgestaltet und angeordnet, dass sie auf die Schneide ausgerichtet ist, damit dort austretendes Kühlmittel bevorzugt die Schneide direkt kühlt, während die beiden seitlichen Austrittsöffnungen auf die seitlichen Flanken/Nebenschneiden und/oder die Ecken zwischen den Flanken und der Schneide ausgerichtet sind.

In einer Ausgestaltung ist vorgesehen, dass der Kühlmittelkanal einen einzigen durch den Einspannbereich verlaufenden Hauptkanal und zwei von dem Hauptkanal im Haltebereich abzweigende Seitenkanäle, die in die seitlichen Austrittsöffnungen münden, aufweist. Dies stellt eine einfache und kostengünstig herzustellende Ausgestaltung für den Kühlmittelkanal dar.

In weiteren Ausgestaltungen ist vorgesehen, dass der Hauptkanal in einen dritten Seitenkanal übergeht, der in eine dritte Austrittsöffnung auf der Oberseite der Abstützung mündet.

Der Übergang zwischen Hauptkanal und Seitenkanälen kann unterschiedlich gestaltet sein. In einer Ausgestaltung ist vorgesehen, dass die Seitenkanäle von dem zentral im Innern angeordneten Hauptkanal schräg durch den Haltebereich zu der jeweiligen Austrittsöffnung verlaufen. Alternativ kann vorgesehen sein, dass zwischen dem Hauptkanal und den Seitenkanälen ein quer, insbesondere senkrecht zur Längsachse des Halters bzw. des Hauptkanals angeordneter Querkanal liegt, in den der Hauptkanal mündet und von dem die Seitenkanäle abzweigen. Aus konstruktiven Gegebenheiten kann es beispielsweise vorteilhaft sein, einen Querkanal vorzusehen, um die Austrittsrichtung des Kühlmittelstrahls der Seitenkanäle auf die Flanken/Nebenschneiden auszurichten. Ist der Durchmesser des Hauptkanals nicht größer als die Breite der Unterstützung, so würden direkt mit dem Hauptkanal verbundene Seitenkanäle einen nach außen gerichteten Kühlmittelstrahl ergeben, welcher nicht an die Flanken seitlich neben der Hauptschneide gelangt. Der Querkanal bietet hier Flexibilität in der Festlegung der Austrittsrichtung. Die letztendliche Funktion ist bei beiden Varianten jedoch weitgehend identisch.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in den Zeichnungen dargestellt und werden in der nachfolgenden Beschreibung näher erläutert. Es zeigen:
- Fig. 1: eine perspektivische Ansicht des erfindungsgemäßen Nutstoßwerkzeugs als Explosionsdarstellung;
- Fig. 2: eine perspektivische Ansicht des erfindungsgemäßen Nutstoßwerkzeugs in zusammengebautem Zustand;
- Fig. 3: eine perspektivische Ansicht des erfindungsgemäßen Nutstoßwerkzeugs von vorne;
- Fig. 4: eine perspektivische Ansicht eines erfindungsgemäßen Nutstoßwerkzeugs mit Innenansicht einer ersten Ausgestaltung des Kühlkanals;
- Fig. 5: eine seitliche Schnittdarstellung der in Fig. 4 gezeigten Ausführungsform des erfindungsgemäßen Nutstoßwerkzeugs;
- Fig. 6: eine Draufsicht auf die in Fig. 4 gezeigte Ausführungsform des erfindungsgemäßen Nutstoßwerkzeugs; und
- Fig. 7: eine perspektivische Ansicht eines erfindungsgemäßen Nutstoßwerkzeugs mit Innenansicht einer zweiten Ausgestaltung des Kühlkanals.

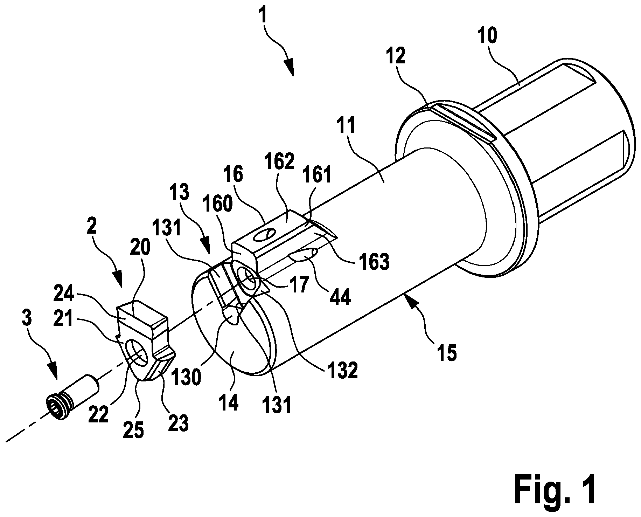

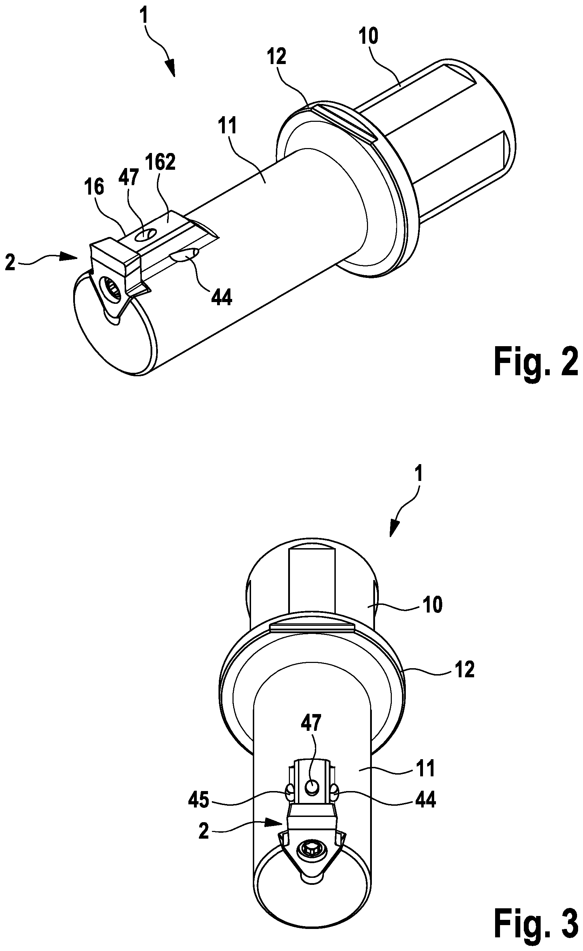

Fig. 1 zeigt eine perspektivische Explosionsdarstellung einer Ausführungsform eines erfindungsgemäßen Nutstoßwerkzeugs. Die Fig. 2 und 3 zeigen diese Ausführungsform in zusammengebautem Zustand als perspektivische Schrägansicht (Fig. 2) und perspektivische Vorderansicht (Fig. 3). Das Nutstoßwerkzeug umfasst im Wesentlichen einen Halter 1 und ein Schneidwerkzeug 2. Der Halter 1 umfasst einen Einspannbereich 10 zum Einspannen in eine Werkzeugmaschine, beispielsweise eine Spindel, einen Haltebereich 11 zum Halten des Schneidwerkzeugs 2 und einen dazwischenliegenden Flansch 12. An seiner dem Einspannbereich 10 abgewandten Stirnseite weist der Haltebereich 11 einen Sitz 13 auf, in dem das Schneidwerkzeug 2 aufnehmbar und darin festlegbar ist. Der Sitz 13 ist durch eine an der Stirnfläche 14 und an der Umfangsfläche 15 des Haltebereichs 11 offene Vertiefung gebildet. Diese Vertiefung weist, ausgehend vom Vertiefungsgrund 130, Sitzwände 131 auf, die sich, ausgehend vom Vertiefungsgrund 130 und zueinander divergierend, zur Umfangsfläche 15 des Haltebereichs 11 hin erstrecken. Der Aufnahmeraum des Sitzes 13 für das Schneidwerkzeug 2 hat somit bei der gezeigten Ausführungsform einen V-förmigen Querschnitt.

Die rückwärtige Endfläche 132 des Sitzes 13 liegt in einer gemeinsamen Ebene mit einer Abstützfläche 160 einer Abstützung 16 (auch als Abstützkörper bezeichnet), so dass die Abstützfläche 160 eine unmittelbare Fortsetzung der hinteren Endfläche 132 des Sitzes 13 bildet. Somit steht für das im Sitz 13 festgelegte Schneidwerkzeug 2 eine durchgehende plane Kontaktfläche zur Verfügung, die sich über den Außenumfang des Haltebereichs 11 hinaus radial mit der Abstützfläche 160 der Abstützung 16 fortsetzt.

Die Abstützung 16 ist an der Umfangsfläche 15 des Haltebereichs 11 als radial vorstehender, einstückig ausgebildeter Abstützkörper ausgebildet. Die Abstützung 16 besitzt dabei in dieser Ausführungsform die Form eines zu seiner Ober- oder Außenseite hin leicht abgeschrägten Klotzes, der, abgesehen von Abschrägungen 161, einen etwa quadratischen Querschnitt besitzt mit einer Oberseite 162 und Seitenflächen 163. Diese Abstützung dient insbesondere dazu, Schneidkräfte und erzeugte Momente in unmittelbarer Nachbarschaft der Angriffsstelle über die vorstehende Abstützung in den Haltebereich 4 einzuleiten, was zu einer Verringerung der am Schneidwerkzeug 2 wirkenden Lastmomente beiträgt.

Das Schneidwerkzeug 2 weist eine Hauptschneide 20 auf, mit der beispielsweise eine Innennut innerhalb einer Bohrung gestoßen werden kann. An seiner der Hauptschneide 20 entgegengesetzten Rückseite weist das Schneidwerkzeug 2 eine plane Anlagefläche auf, die, wenn das Schneidwerkzeug 2 im Sitz 13 aufgenommen ist, formschlüssig an der hinteren Endfläche 132 und der sich radial fortsetzenden Abstützfläche 160 anliegt. Wie in Fig. 1 zu erkennen ist, befindet sich am Übergangsbereich zwischen Endfläche 132 und Abstützfläche 160 eine Gewindebohrung 17 für eine Spannschraube 3 in Form einer eine Durchgangsbohrung 22 im Schneidwerkzeug 2 durchgreifenden Senkkopfschraube, mittels derer das Schneidwerkzeug 2 im Sitz 13 festspannbar ist. Der Festlegeteil 21 des Schneidwerkzeugs 2 befindet sich dann mit Seitenwänden 23 in seitlicher Anlage an den Seitenwänden 131 und der der Hauptschneide 20 benachbarte Schneidenteil 24 des Schneidwerkzeugs 2 liegt an der Abstützfläche 160 der Abstützung 16 an.

Wie ebenfalls in den Fig. 1 bis 3 erkennbar ist, hat das Festlegeteil 21 des blockförmig gestalteten Schneidwerkzeugs 2 im Wesentlichen eine Keilform, die dem V-förmigen Aufnahmequerschnitt des Sitzes 13 angepasst ist, wobei die Keilform bei der vorliegenden Ausführungsform im unteren Scheitelbereich 25 abgerundet ist. Die sich vom Scheitelbereich 25 divergierend erstreckenden Seitenwände 23 des Festlegeteils 21 weisen von der ebenen Gestalt abweichende Flächenbereiche oder eine gewisse ballige Formgebung für eine optimale Anlage an den Sitzwänden 131 auf. Die Enden der Sitzwände 131 am Vertiefungsgrund 130 sind durch eine Ausnehmung in Form einer Teilbohrung voneinander getrennt, so dass am Vertiefungsgrund 130 ein Freiraum zwischen Halter 1 und Scheitelbereich 130 des im Sitz 13 aufgenommenen Schneidwerkzeugs 2 erzeugt wird.

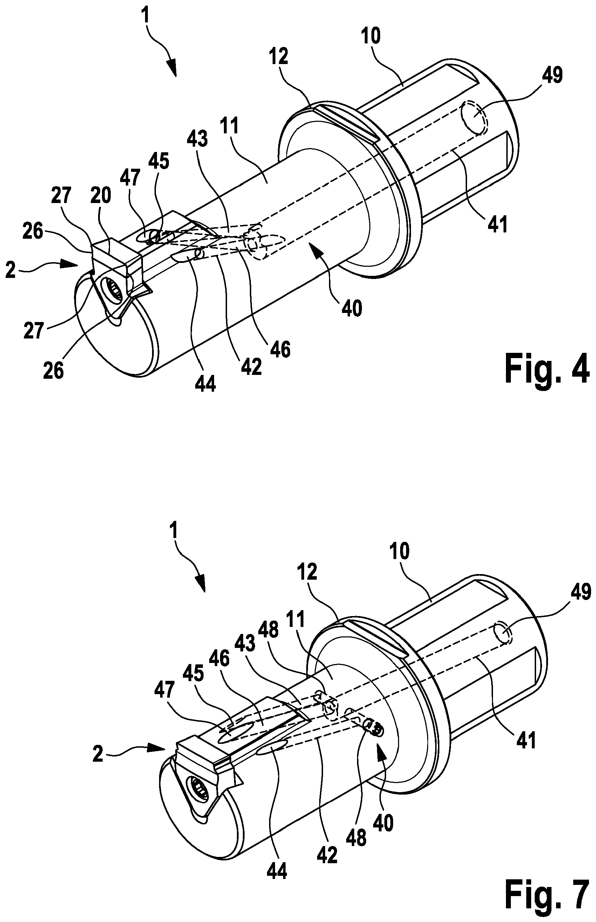

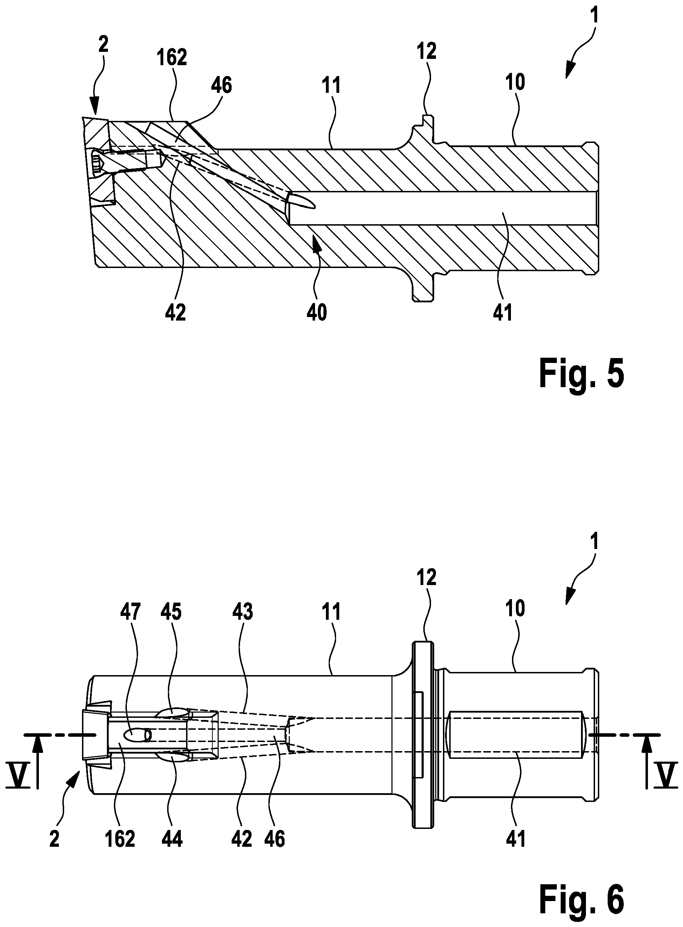

Erfindungsgemäß ist vorgesehen, dass im Innern des Halters 1 ein Kühlmittelkanal 40 verläuft. Dieser Kühlmittelkanal 40 ist in einer ersten Ausführungsform in den Fig. 4 bis 6 als perspektivische Schrägdarstellung (Fig. 4), als Schnittansicht (Fig. 5) und als Draufsicht (Fig. 6) gezeigt. Fig. 7 zeigt eine zweite Ausführungsform des Kühlmittelkanals 40 in einer perspektivischen Schrägdarstellung. Der Kühlmittelkanal 40 weist einen Hauptkanal 41 und mindestens zwei Seitenkanäle 42, 43 auf. Der Hauptkanal 41 verläuft zentral durch den Einspannbereich 10 und bevorzugt ein Stück weit bis in den Haltebereich 11. Dort zweigen die beiden Seitenkanäle 42, 43 von dem Hauptkanal 41 ab. Die beiden Seitenkanäle 42, 43 verlaufen schräg durch den Haltebereich und münden in Austrittsöffnungen 44, 45, die erfindungsgemäß in Umfangsrichtung gesehen seitlich neben der Abstützung 16 und/oder in dessen Seitenflächen 163 angeordnet sind. Die Austrittsöffnungen 44, 45 sind also bevorzugt vollständig neben der Abstützung 16 (in der Umfangsfläche 15 des Haltebereichs 11) oder vollständig in den Seitenflächen 163 angeordnet. Es kann aber auch vorgesehen sein, dass die Austrittsöffnungen 44, 45 jeweils zum Teil neben der Abstützung 16, also in der Umfangsfläche 15 des Haltebereichs 11, und zum Teil in (bzw. an) der angrenzenden Seitenfläche 163 der Abstützung 16 angeordnet sind.

An der Eintrittsöffnung 49 in den Hauptkanal 41 eingeführtes Kühlmittel fließt somit durch den Hauptkanal 41 und die Seitenkanäle 42, 43, bis es an den Austrittsöffnungen 44, 45 austritt. Da diese Austrittsöffnungen 44, 45 in unmittelbarer Nähe des Schneidwerkzeugs 2 angeordnet sind, trifft das Kühlmittel sicher auf dessen Schneidenteil 24, um dort die gewünschte Kühlung bzw. Schmierung an der Zerspanstelle zu bewirken.

Bevorzugt ist dabei vorgesehen, dass die Austrittsöffnungen 44, 45 möglichst nahe an dem Sitz 13 angeordnet sind. Ferner ist bevorzugt vorgesehen, dass die Seitenkanäle 42, 43 und/oder die Austrittsöffnungen 44, 45 so ausgestaltet und angeordnet sind, also beispielsweise einen solchen Verlauf durch den Haltebereich 11 nehmen und eine derart gestaltete Öffnung aufweisen, dass das austretende Kühlmittel auf die Schneide 20 und/oder seitliche, an die Schneide 20 angrenzende Flanken 26 (bzw. dort befindliche Nebenschneiden) und/oder zwischen der Schneide 20 und den Flanken 26 liegende Ecken 27 des Schneidwerkzeugs 2 trifft. Dadurch ist eine gute Kühlung und Schmierung der Flanken (Nebenschneiden) und Schneidecken/-radien des Schneidwerkzeugs 2 auch bei großen Bearbeitungstiefen in Bohrungen gewährleistet.

Bevorzugt ist ferner vorgesehen, dass der Kühlmittelkanal 40 einen dritten Seitenkanal 46 aufweist, der in einer dritten Austrittsöffnung 47 mündet. Der dritte Seitenkanal 46 zweigt bevorzugt ebenfalls von dem Hauptkanal 41 ab und verläuft schräg durch das Halteteil 11, wobei er bevorzugt auf der Oberseite 162 der Abstützung 16 in die dritte Austrittsöffnung 47 mündet. Bevorzugt ist dabei der dritte Seitenkanal 46 und/oder die dritte Austrittsöffnung 47 so ausgestaltet und angeordnet, dass austretendes Kühlmittel bevorzugt auf die Schneide 20 trifft, um dort an der Zerspanstelle eine mittelbare Kühlung und Schmierung zu bewirken.

Anders als bei der in den Fig. 4 bis 6 gezeigten Ausführungsform zweigen bei der in Fig. 7 gezeigten Ausführungsform des Kühlmittelkanals 40 die Seitenkanäle 42, 43 nicht unmittelbar von dem Hauptkanal 41 ab, sondern dort ist ein quer (bevorzugt senkrecht) zum Hauptkanal 41 (und quer zur Längserstreckungsrichtung des Halters 1) verlaufender Querkanal 48 vorgesehen, der von dem Hauptkanal 41 abzweigt und von dem wiederum zumindest die Seitenkanäle 42, 43 abzweigen. In Bezug auf die Funktionsweise führt dies zu keiner wesentlichen Änderung, ermöglicht jedoch eine andere Herstellung des Kühlmittelkanals 40 im Halter 1 sowie ggf. eine bessere Möglichkeit, die Richtung der Seitenkanäle 43, 44 und damit die Austrittsrichtung des Kühlmittels aus den Seitenkanälen 42, 43 festzulegen.

Mit dem erfindungsgemäß vorgeschlagenen Halter und dem erfindungsgemäß vorgeschlagenen Nutstoßwerkzeug mit einem solchen Halter wird eine verbesserte Kühlung und Schmierung des Schneidwerkzeugs, insbesondere dessen Schneide sowie von an die Schneide angrenzenden Flanken (Nebenschneiden) und Schneidecken bzw. Schneidradien, erreicht.

## Patentansprüche

1. Halter (1) für ein Nutstoßwerkzeug mit einem eine Schneide (20) aufweisenden Schneidwerkzeug (2) und dem Halter (1) zum Halten des Schneidwerkzeugs (2),
wobei der Halter (1) einen Einspannbereich (10) und einen Haltebereich (11) aufweist, wobei der Haltebereich (11) an seinem dem Einspannbereich (10) abgewandten Ende einen Sitz (13) für das Schneidwerkzeug (2) aufweist, der so ausgestaltet und angeordnet ist, dass bei in dem Sitz (13) montiertem Schneidwerkzeug (2) dessen Schneide (20) über die Umfangsfläche des Haltebereichs (11) vorsteht, wobei der Haltebereich (11) an seiner Umfangsfläche (15) eine Abstützung (16) für das Schneidwerkzeug (2) aufweist, wobei die Abstützung (16) an der Umfangsfläche (15) des Haltebereichs (11) als radial vorstehender, einstückig ausgebildeter Abstützkörper ausgebildet ist, und wobei im Innern des Halters (1) ein Kühlmittelkanal (40) verläuft,
**dadurch gekennzeichnet, dass** der Kühlmittelkanal (40) zwei Austrittsöffnungen (44, 45) aufweist, die in Umfangsrichtung gesehen seitlich neben der Abstützung (16) und/oder in Seitenflächen (161, 163) der Abstützung (16) angeordnet sind.

2. Halter nach Anspruch 1,
**dadurch gekennzeichnet, dass** der Abstand der Austrittsöffnungen (44, 45) von dem Sitz (13) geringer ist als von dem Einspannbereich (10).

3. Halter nach einem der vorstehenden Ansprüche,
**dadurch gekennzeichnet, dass** der Kühlmittelkanal (40) und/oder die Austrittsöffnungen (43, 44) so ausgestaltet und angeordnet sind, dass austretendes Kühlmittel auf die Schneide (20) und/oder seitliche, an die Schneide (20) angrenzende Flanken (26) und/oder zwischen der Schneide (20) und den Flanken (26) liegende Ecken (27) des Schneidwerkzeugs trifft.

4. Halter nach einem der vorstehenden Ansprüche,
**dadurch gekennzeichnet, dass** der Kühlmittelkanal (40) eine dritte Austrittsöffnung (47) aufweist, die auf der Oberseite (162) der Abstützung (16) angeordnet ist.

5. Halter nach Anspruch 4,
**dadurch gekennzeichnet, dass** der Kühlmittelkanal (40) und/oder die Austrittsöffnungen (44, 45, 47) so ausgestaltet und angeordnet sind, dass aus der dritten Austrittsöffnung (47) austretendes Kühlmittel auf die Schneide (20) trifft und dass aus den beiden anderen Austrittsöffnungen (44, 45) austretendes Kühlmittel auf an die Schneide (20) angrenzende Flanken (26) und/oder zwischen der Schneide (20) und den Flanken (26) liegende Ecken (27) des Schneidwerkzeugs trifft.

6. Halter nach einem der vorstehenden Ansprüche,
**dadurch gekennzeichnet, dass** der Kühlmittelkanal (40) einen durch den Einspannbereich (10) verlaufenden Hauptkanal (41) und zwei von dem Hauptkanal (41) im Haltebereich (11) abzweigende Seitenkanäle (42, 43), die in die seitlichen Austrittsöffnungen (44, 45) münden, aufweist.

7. Halter nach Anspruch 6,
**dadurch gekennzeichnet, dass** der Hauptkanal (41) in einen dritten Seitenkanal (46) übergeht, der in eine dritte Austrittsöffnung (47) mündet, die auf der Oberseite (162) der Abstützung (16) angeordnet ist.

8. Halter nach Anspruch 6 oder 7,
**dadurch gekennzeichnet, dass** die Seitenkanäle (42, 43, 46) von dem zentral im Innern angeordneten Hauptkanal (41) schräg durch den Haltebereich (11) zu der jeweiligen Austrittsöffnung (44, 45, 47) verläuft.

9. Halter nach einem der Ansprüche 6 bis 8,
**dadurch gekennzeichnet, dass** zwischen dem Hauptkanal (41) und den Seitenkanälen (42, 43, 46) ein quer zur Längsachse des Halters angeordneter Querkanal (48) liegt, in den der Hauptkanal (41) mündet und von dem die Seitenkanäle (42, 43) abzweigen.

10. Nutstoßwerkzeug mit einem eine Schneide (20) aufweisenden Schneidwerkzeug (2) und einem Halter (1) nach einem der Ansprüche 1 bis 9 zum Halten des Schneidwerkzeugs (2).

## Claims

1. A holder (1) for a broaching tool with a cutting tool (2) comprising a cutting edge (20) and with the holder (1) for holding the cutting tool (2),
wherein the holder (1) comprises a clamping region (10) and a holding region (11), wherein the holding region (11) comprises, at its end facing away from the clamping region (10), a seat (13) for the cutting tool (2), which is configured and arranged such that, when the cutting tool (2) is mounted into the seat (13), its cutting edge (20) projects beyond the circumferential surface of the holding region (11), wherein the holding region (11) comprises, on its circumferential surface (15), a support (16) for the cutting tool (2), wherein the support (16) is formed on the circumferential surface (15) of the holding region (11) as an integral, radially projecting supporting body, and wherein a coolant channel (40) extends inside the holder (1),
**characterized in that** the coolant channel (40) comprises two exit openings (44, 45) which, as seen in the circumferential direction, are arranged laterally adjacent to the support (16) and/or in lateral surfaces (161, 163) of the support (16).

2. The holder as claimed in claim 1,
**characterized in that** the distance of the exit openings (44, 45) from the seat (13) is shorter than from the clamping region (10).

3. The holder as claimed in one of the preceding claims,
**characterized in that** the coolant channel (40) and/or the exit openings (43, 44) are configured and arranged such that exiting coolant impinges the cutting edge (20) and/or lateral flanks (26) adjoining the cutting edge (20) and/or corners (27) of the cutting tool which are located between the cutting edge (20) and the flanks (26).

4. The holder as claimed in one of the preceding claims,
**characterized in that** the coolant channel (40) comprises a third exit opening (47), which is arranged on the upper side (162) of the support (16).

5. The holder as claimed in claim 4,
**characterized in that** the coolant channel (40) and/or the exit openings (44, 45, 47) are configured and arranged such that coolant exiting from the third exit opening (47) impinges the cutting edge (20) and that coolant exiting from the two other exit openings (44, 45) impinges flanks (26) adjoining the cutting edge (20) and/or corners (27) of the cutting tool which are located between the cutting edge (20) and the flanks (26).

6. The holder as claimed in one of the preceding claims,
**characterized in that** the coolant channel (40) comprises a main channel (41) extending through the clamping region (10) and two lateral channels (42, 43) branching off from the main channel (41) in the holding region (11), which two lateral channels lead into the lateral exit openings (44, 45).

7. The holder as claimed in claim 6,
**characterized in that** the main channel (41) merges into a third lateral channel (46), which leads into a third exit opening (47) which is arranged on the upper side (162) of the support (16).

8. The holder as claimed in claim 6 or 7,
**characterized in that** the lateral channels (42, 43, 46) extend from the main channel (41) arranged centrally in the inside to the respective exit opening (44, 45, 47) at an angle through the holding region (11).

9. The holder as claimed in one of claims 6 to 8,
**characterized in that** a transverse channel (48), which is arranged transversely to the longitudinal axis of the holder and into which the main channel (41) leads and from which the lateral channels (42, 43) branch, is located between the main channel (41) and the lateral channels (42, 43, 46).

10. A broaching tool with a cutting tool (2) comprising a cutting edge (20) and with a holder (1) as claimed in one of claims 1 to 9 for holding the cutting tool (2).

## Revendications

1. Support (1) pour un outil de rainurage avec un outil de coupe (2) présentant un tranchant (20) et le support (1) pour maintenir l'outil de coupe (2), le support (1) présentant une zone de serrage (10) et une zone de maintien (11), la zone de maintien (11) présentant, à son extrémité détournée de la zone de serrage (10), un siège (13) pour l'outil de coupe (2), qui est conçu et agencé de telle sorte que, lorsque l'outil de coupe (2) est monté dans le siège (13), son tranchant (20) fait saillie au-delà de la surface périphérique de la zone de maintien (11), la zone de maintien (11) présentant sur sa surface périphérique (15) un appui (16) pour l'outil de coupe (2), l'appui (16) étant réalisé sur la surface périphérique (15) de la zone de maintien (11) sous forme de corps d'appui réalisé d'un seul tenant, faisant saillie radialement, et un canal d'agent de refroidissement (40) s'étendant à l'intérieur du support (1),
**caractérisé en ce que** le canal d'agent de refroidissement (40) présente deux ouvertures de sortie (44, 45) qui, vues dans la direction périphérique, sont agencées latéralement à côté de l'appui (16) et/ou dans des surfaces latérales (161, 163) de l'appui (16).

2. Support selon la revendication 1,
**caractérisé en ce que** la distance des ouvertures de sortie (44, 45) par rapport au siège (13) est inférieure à celle par rapport à la zone de serrage (10).

3. Support selon l'une quelconque des revendications précédentes,
**caractérisé en ce que** le canal d'agent de refroidissement (40) et/ou les ouvertures de sortie (43, 44) sont conçus et agencés de telle sorte que l'agent de refroidissement sortant arrive sur le tranchant (20) et/ou les flancs latéraux (26) adjacents au tranchant (20) et/ou les coins (27) de l'outil de coupe situés entre le tranchant (20) et les flancs (26).

4. Support selon l'une quelconque des revendications précédentes,
**caractérisé en ce que** le canal d'agent de refroidissement (40) présente une troisième ouverture de sortie (47) qui est agencée sur le côté supérieur (162) de l'appui (16).

5. Support selon la revendication 4,
**caractérisé en ce que** le canal d'agent de refroidissement (40) et/ou les ouvertures de sortie (44, 45, 47) sont conçus et agencés de telle sorte que l'agent de refroidissement sortant de la troisième ouverture de sortie (47) arrive sur le tranchant (20) et que l'agent de refroidissement sortant des deux autres ouvertures de sortie (44, 45) arrive sur les flancs (26) adjacents au tranchant (20) et/ou les coins (27) de l'outil de coupe situés entre le tranchant (20) et les flancs (26).

6. Support selon l'une quelconque des revendications précédentes,
**caractérisé en ce que** le canal d'agent de refroidissement (40) présente un canal principal (41) s'étendant à travers la zone de serrage (10) et deux canaux latéraux (42, 43) bifurquant du canal principal (41) dans la zone de maintien (11) et qui débouchent dans les ouvertures de sortie latérales (44, 45).

7. Support selon la revendication 6,
**caractérisé en ce que** le canal principal (41) se prolonge par un troisième canal latéral (46) qui débouche dans un troisième ouverture de sortie (47) agencée sur le côté supérieur (162) de l'appui (16).

8. Support selon la revendication 6 ou 7,
**caractérisé en ce que** les canaux latéraux (42, 43, 46) s'étendent en oblique à travers la zone de maintien (11) depuis le canal principal (41) agencé au centre à l'intérieur jusqu'à l'ouverture de sortie respective (44, 45, 47).

9. Support selon l'une quelconque des revendications 6 à 8,
**caractérisé en ce qu'**entre le canal principal (41) et les canaux latéraux (42, 43, 46) se situe un canal transversal (48) agencé transversalement à l'axe longitudinal du support, dans lequel débouche le canal principal (41) et duquel bifurquent les canaux latéraux (42, 43).

10. Outil de rainurage avec un outil de coupe (2) présentant un tranchant (20) et un support (1) selon l'une quelconque des revendications 1 à 9 pour maintenir l'outil de coupe (2).
